# EUROPEAN PATENT SPECIFICATION

(11) **EP 0 665 765 B1**
(45) Date of publication and mention of the grant of the patent: **13.03.2002**
(21) Application number: 93922504.1
(22) Date of filing: 04.10.1993
(51) Int. Cl.: B01D 45/14, F22B 37/32, B01D 46/26

(54) **METHOD AND DEVICE FOR TREATING VAPOUR FOR DROPS AND USING SUCH A DEVICE**
METHODE UND VORRICHTUNG ZUR BEHANDLUNG VON DAMPF ZUR ENTFERNUNG VON TROPFEN UND VERWENDUNG EINER SOLCHEN VORRICHTUNG
PROCEDE ET DISPOSITIF DE TRAITEMENT DE LA VAPEUR VISANT A ELIMINER LES GOUTTELETTES DE CE DISPOSITIF

(30) Priority: 05.10.1992 DK 121692
(43) Date of publication of application: 09.08.1995
(73) Proprietor: FUNKI MANURA A/S, 6400 Sonderborg (DK); OHM Electric Co., Ltd., Hamamatsu, Shizuoka 430 (JP)
(72) Inventor: GRAMKOW, Asger, DK-6440 Augustenborg (DK); BASTHOLM, Jeppe, Christian, DK-6400 Soenderborg (DK)
(74) Representative: Nielsen, Leif
(86) International application number: DK9300318
(87) International publication number: WO9407589

(56) References cited:
- CH-A- 495 767
- DE-A- 1 544 073
- DE-C- 819 240
- DE-C- 3 737 221
- GB-A- 235 301
- DERWENT'S ABSTRACT, No. 90-183331/24, week 9024; & SU,A,1525402 (NUCL POWER EQUIP), 30 November 1989 (30.11.89).

## Description

The present invention relates to an evaporator comprising a device for foam suppression and for removing drop-formed liquids from a vapour by a method according to the invention and wherein said device comprises a rotatable casing consisting of a cylinder having holes in its cylindrical surface enabling the transport of vapour/gas to the inside of the casing, at one of the ends of said cylinder is provided with a central vapour extraction opening through which the vapour/gas is extracted from the inside of the casing to the subsequent piping, wherein the inside of said casing is being sealed of from the vessel containing the polluted liquid to be evaporated and thereby only having the holes in the cylindrical surface as passage through said casing and wherein the extraction opening is formed by a vapour extraction pipe which is sealingly in contact with the casing and the end of which extends concentric around an axis of rotation into the rotatable casing, said vessel contains the liquid which extends to a given liquid level.

The invention also relates to a method for foam suppression and for removing drop-formed liquids from a gas/vapour by means of an evaporator according to the present invention, and wherein a vapour extraction opening is positioned in a rotatable casing provided with openings, which casing rotates with such a number of revolutions that the peripheral velocity of the radial outer end of each of the openings of the casing exceeds the penetrating velocity of vapour through the openings.

The method may be used in connection with breaking down foam formations when evaporation of polluted liquids is carried out. To mention examples of this, industrial waste water, degreasing water, organic liquids, e.g. sewage, waste from production of olive oil and the like.

The method, which e.g. is known from DE-A-1,544,073 and GB-A-235,301, may be used in traditional drop-catching in vapour pipes. Such separation of drops from vapour may be desired, e.g. for protection of subsequent vapour compressors or in order to ensure that a distillate/ condensate appears without impurities from entrained drops.

During extraction of gasses from containers it may also be desired to avoid entrainment of drops, which may contain polluting substances. In this situation drop-catchers may be provided in the container or in pipings.

In connection with evaporation of liquids, which either are to be separated in various components, or in which a concentration of a liquid in an emulsification is desired, and in which foam formation appears during the boiling or the concentration, it is desirable to break down the foam/bubbles in such a way that only vapour is removed from the evaporator or the boiler. There is a great risk of the foam/bubbles being entrained in form of drops if the foam/bubbles are not broken down. Hereby, there will be a risk of the contaminating part being entrained, and thus constitute an impurity during subsequent condensing of the vapour.

A series of various principles are known for breaking down foam formations. These principles comprise chemical treatment, thermal treatment, and mechanical treatment for suppressing the foam. However, up till now it has not been possible to solve the foam suppression problem in a simple and effective way.

In the following only the term vapour is used for the sake of convenience, but it is understood that this expression also means gasses.

For mechanical treating of vapour for drops cyclones and other forms of drop separators are known. A common characteristic of these is that they constitute separate and often relatively expensive or maintenance-demanding devices, which are inserted in a vapour pipe and herein act as passive devices, whose effect solely depends on the vapour velocity. Thus, the known mechanical drop-catchers have not made it possible to retain drops in vapour passages in a simple and inexpensive way.

It is the object of the present invention to remedy this problem by providing a very simple method, which makes it possible to use a simple mechanical and maintenance-free construction in order to ensure that a vapour is freed of drops irrespective of the vapour velocity, and which also makes an effective foam suppression possible.

According to the invention this is obtained with a evaporator comprising a device for foam suppression and for removing drop-formed liquids from a vapour said device comprises a rotatable casing consisting of a cylinder having holes in its cylindrical surface enabling the transport of vapour/gas to the inside of the casing, at one of the ends of said cylinder is provided with a central vapour extraction opening through which the vapour/gas is extracted from the inside of the casing to the subsequent piping, wherein the inside of said casing is being sealed of from the outside of said casing and thereby only having the holes in the cylindrical surface as passage through said casing and wherein the extraction opening is formed by a vapour extraction pipe which is sealingly in contact with the casing and the end of which extends concentric around an axis of rotation into the rotatable casing, wherein said casing is arranged in a vessel, which may contain a liquid to be evaporated extending to a given liquid level and that said casing is arranged immediately over said liquid level in said vessel.

The present invention also defines a method for foam suppression and for removing drop-formed liquids from a gas/vapour by means of an evaporator as described above, and wherein a vapour extraction opening is positioned in a rotatable casing provided with openings, which casing rotates with such a number of revolutions that the peripheral velocity of the radial outer end of each of the openings of the casing exceeds the penetrating velocity of vapour through the openings wherein the casing is rotated in a position immediately over a liquid level in a vessel of an evaporator, said liquid is boiled in the vessel from where the vapour is extracted whereby the foam produced from said boiling is suppressed.

The method and the evaporator may be used for combined drop catching and foam suppression in vessels, which contain boiling/foaming liquids, and will actively prevent foam and drops from passing into the vapour extraction opening, and simultaneously will actively break down and prevent foam formation.

The method only requires that an extraction opening is formed either by way of a pipe or as a direct opening in a surface, which is provided in a rotating casing. It is noted that the casing may be said to have a certain radial thickness. Therefore, peripheral velocity is mentioned for the radial outer end of the openings. By rotating the casing so that the peripheral velocity for the radial outer end of each of the openings exceeds the penetrating velocity of the vapour, drops or foam will not be able to penetrate the openings as such drops or foam have a maximum penetrating velocity corresponding to the penetrating velocity of the vapour. However, the vapour may freely pass through the openings because of the difference of pressure over the openings of the casing. The method is very simple and secure, as one rather simply may vary the form of the openings and/or the form of the casing, increase the number of revolutions to a suitable velocity, depending on the liquids which are boiled/evaporated.

The openings may in a simple way be provided of net, in which the size of the mesh and the rotation of the casing ensures that the drops do not pass into the casing and are entrained during extraction of vapour from the interior of the casing. The device does not require maintenance in form of replacing filters or other parts. The device will be very simple to manufacture. By varying the form of the casing, rotary velocity, size of the openings, it is possible to obtain an effective drop separation independent of the vapour velocity. Thus, the device may be said to be an active unit.

For the rotation of the casing a peripheral velocity is chosen, which is greater than the penetrating velocity of the vapour, and normally, a safety factor will be chosen, ratio between penetrating velocity and peripheral velocity, in the order of 2-10, preferably 3-5. However, certain specific conditions may indicate that a larger safety factor is chosen. This choice is due to the fact that the casing normally is manufactured of a cylindrical net, in which the ratio between the thickness of the net and the dimensions of each opening in the direction of the rotation are between 3 and 5. Hereby, it is ensured that a drop, which is positioned at an outer front edge of an opening, is unable to pass through the opening as it will so to speak be caught by an innermost, rear edge of the opening. Front and rear refer to the direction of the rotation of the casing.

The evaporator is particularly advantageous for use in a plant for mechanical vapour compression in order to separate polluted liquids, which give strong foam formation. It is desired to make the elements of the evaporator as small as possible. This means that the vessel or the boiler is also desired to be as small as possible. However, this increases the risk of the foam reaching a vapour extraction opening, which often is provided at the top of the boiling chamber. In such boilers it is customary to use a pump for circulating the liquid through the heat exchanger, which is used for compression of vapour. The motor, which is used for circulation, may advantageously be used for rotating the casing. Thus, in a very secure way, a purity of the liquid being condensed by the compression of vapour is obtained.

For the treatment of polluted liquids through mechanical compression of vapour it has so far been necessary to add foam suppressing means in order to break down or prevent foam formation. However, these foam suppressing means have been undesirable, partly for economic reasons and partly in order to avoid the inconvenience of subsequently having to remove these means from the polluted liquid. In this situation it has also been necessary to have a good knowledge of the initial material in order to have the possibility of adding the correct amount and the correct composite of foam suppressing means. These drawbacks are remedied with a method and an apparatus according to the invention.

### BRIEF DESCRIPTION OF THE DRAWING

The invention will now be further explained with reference to the accompanying schematic drawing, wherein
- Fig. 1: shows a schematic positioning of an evaporator, which is used for mechanical compression of vapour, and
- Fig. 2: illustrates an embodiment of a device for an evaporator according to the invention.

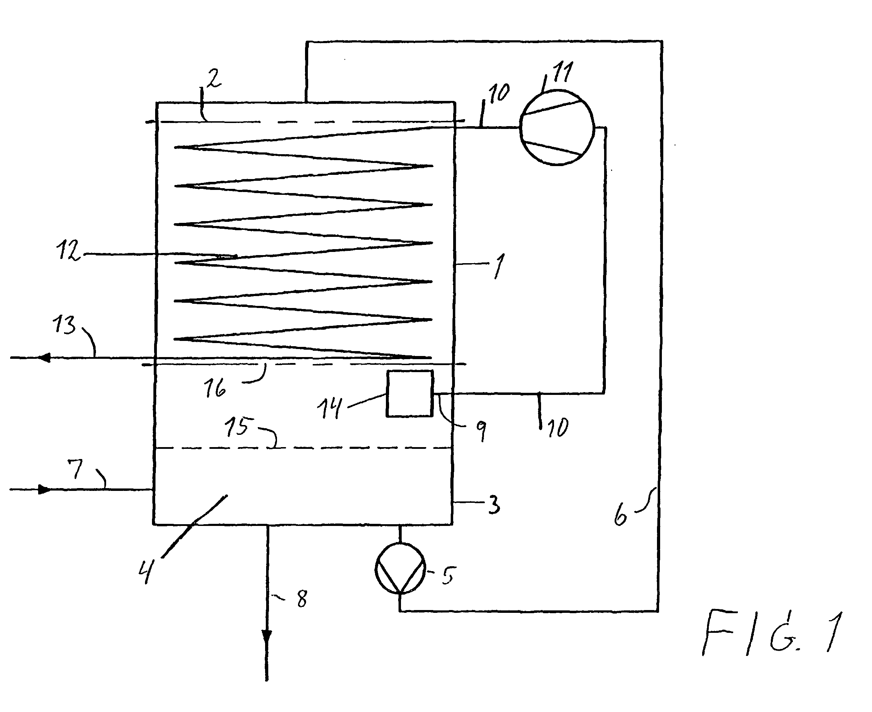

Figure 1 outlines the construction of a plant for separating polluted liquids in mechanical compression of vapour. Thus, according to a known principle, the plant is used to separate a polluted liquid part, preferably water, and to concentrate the polluted part. The primary liquid part which has to be treated may consist of water, but may also consist of other liquids, e.g. Freon, which is polluted with oil.

The plant comprises an evaporator 1. At the top of the evaporator a distribution system 2 is provided, and at the bottom, a boiler or a vessel 3 is provided, which contains the polluted liquid 4. The vessel 3 is connected with a circulating pump 5 and a piping 6, which pumps the heated and polluted liquid 4 to the distribution system 2 at the top of the evaporator. Furthermore, the vessel 3 has an inlet 7 for adding polluted liquids 4 and an outlet piping 8, which is used for emptying the concentrated, polluted part out of the vessel 3.

A vapour outlet 9 is positioned at the top of the vessel, which by way of a piping 10 and a compressor 11 is connected with a heat exchanger 12, which is positioned in the evaporator 1. An outlet 13 for condensates is positioned at the bottom of the heat exchanger 12. A device 14 is connected with the vapour outlet 9 in a position over the liquid level 15, which is present in the vessel 3.

It is noted that the drawing does not illustrate a construction of the electronic control of the apparatus. However, such a control system will be well-known to a person skilled in the art, and therefore does not require a detailed explanation.

Thus, the polluted liquid 4 is added in portions at the inlet 7 and is drained out, after a concentration has occurred by way of the outlet piping 8. The condensate or the distillate is drained by way of the outlet 13.

When the polluted liquid has been filled into the vessel 3, the temperature herein is brought up to a condition for temperature and pressure, which is directly below the boiling point for the liquid desired to be treated (the condensate). Thus, in the case of water, the temperature is approximately brought up to 100°C. This is achieved by means of heating elements (not shown).

When the temperature has reached approximately 100°C, the compressor 11 is started, and by this time at the latest the circulating pump 5 is also started. The compressor 11 creates a partial vacuum in the vessel 3 and thereby forces the vapour, which is positioned over the polluted liquid 4, through the device 14, after which the vapour is lead to the compressor 11 by way of the piping 10, and subsequently into the heat exchanger 12, in which a heat exchange occurs of the vapour on one side of the heat exchanger and the heated, polluted liquid 4 on the other side of the heat exchanger. Hereby, the vapour, which has been compressed in the compressor 11, will give off its energy, which is transferred to the circulated, polluted liquid 4 on the other side of the heat exchanger. Hereby, the liquid desired to be treated is evaporated. Through the openings 16 this vapour passes into the top of the vessel 3 and will again pass through the device 14, the piping 10, and the compressor 11 into the heat exchanger 12. While giving off its energy, the vapour is condensed, and may subsequently be removed as a condensate through the outlet 13.

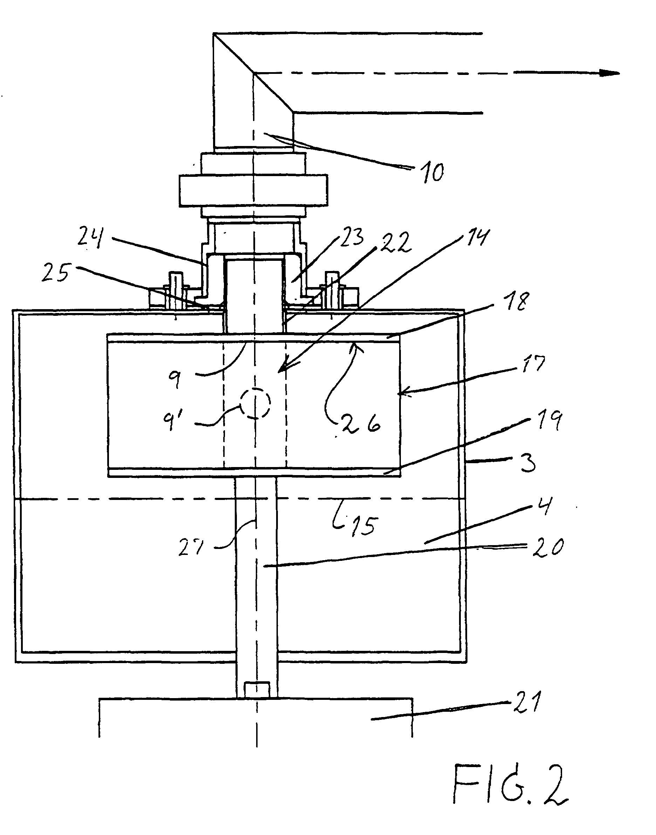

A more detailed explanation of the device 14 will be given in connection with Figure 2, which merely illustrates one single embodiment of the device 14. It is noted that identical or corresponding parts have been given identical reference numbers, and therefore will not be further explained in connection with Figure 2.

The device 14 consists of a cylindrical net 17, which at each end is closed by a disk 18,19. Through a shaft 20 the lower disk 19 is connected with an electric motor 21, which may rotate the device 14.

The upper disk 18 has a central vapour extraction opening 9, through which the vapour 9 is extracted into the piping 10, which is connected with a compressor 11 as illustrated in Figure 1. An extraction pipe 22 is positioned around the vapour extraction opening 9, which pipe 22 is firmly connected with the upper disk 18. The extraction pipe may optionally pass through the upper disk 18, as illustrated with the broken line. In this situation the extraction opening may be constituted of an end of the extraction pipe 22. If the extraction pipe 22 is led. all the way through the device 14 and is also connected with the lower disk 19 with regard to the rigidity of the construction, the vapour extraction pipe may be constituted of an opening 9' in the circumference of the extraction pipe 22. The extraction pipe 22 is mounted sealingly and pivotally by means of a bearing 23 and a stuffing box 24 and a gasket 25. At the upper end the stuffing box 24 is connected sealingly to the piping 10.

The size of the openings in the net 17 and the peripheral velocity, which the net 17 is provided with during the rotation of the device 14, depend on the type of polluted liquid 4, which is located in the vessel 3, and of the amount of vapour, which is to be removed per time unit.

By separating the polluted liquid 4, which has a foaming effect either during the concentration or already from the beginning, vapour containing bubbles will be formed at the liquid surface 15.

By using the device 14 the rotation of the net 17 will give rise to the destruction of any bubbles, which reach the net, in such a way that only vapour passes through the openings. Furthermore, any drops hanging in the vessel 3 above the liquid surface 15 will be prevented from passing through the net 17, as said net rotates at such a number of revolutions that the peripheral velocity of the outer side of the net 17 exceeds the penetrating velocity of the vapour and consequently that of the drops/foam through the openings. As the drops are prevented from passing through the openings, only vapour will be extracted through the net 17 and out by way of the vapour extraction opening 9. Thus, it is possible to avoid entrainment of impurities, e.g. soaps, oils, and the like during extraction of vapour from the vessel 3. This eliminates the risk of polluted substances being carried over into the condensate, which is removed by way of the piping 13.

The rotary velocity, area, thickness, and fineness of the net 17 determine the security achieved against the entrainment of drops, and therefore these parameters are attuned to the vapour velocity in the extraction pipe 22. A non-limiting example of the dimensioning is given below, in which the safety factor of 4.6 is an expression for the ratio between the peripheral velocity of the net 17 and the vapour velocity. The safety factor may be between 2 and 10, but will preferably be between 3 and 5.

### Example

| | | |
|---|---|---|
| h = | 0.060 | height of foam suppressor |
| kap = | 25 l/hour | capacity of an apparatus in 1/hour |
| sfaktor = | 5 | safety factor |
| d = | 0.095 | diameter of foam suppressor |
| f = | 0.64 | open area/total area in net |
| n = | 925 | revolutions/minute |
| v = | 1 | vapour velocity through the openings in m/s |
| v = (kap * 1.65) / (d * π * h * f * 3600) | | |
| v = (n * d * π / 60 / sfaktor) | | |

1.65 indicates that 1.65 m³ weighs 1 kilogram.

### Variable values:

| | |
|---|---|
| d = | .095000000 |
| f = | .64000000 |
| h = | .060000000 |
| kap = | 25.000000 |
| n = | 925.00000 |
| sfaktor = | 4.6020063 |
| v = | .99980833 |

Only one embodiment of the evaporator according to the invention is described above. However, the device forming a part of the evaporator may be made of other solids of revolution. Thus, the device may comprise a cup-shaped body. However, it is important in any solid of revolution that the openings, through which the vapour passes into an inner casing 26, are formed at a certain distance from the rotational axis 27, around which the body rotates. Hereby, it will be possible to use a smaller number of revolutions of the body.

## Claims

1. Evaporator (1) comprising a device (14) for foam suppression and for removing drop-formed liquids from a vapour by a method according to any one of the claims 4-6, said device comprises a rotatable casing (17) consisting of a cylinder (17) having holes in its cylindrical surface enabling the transport of vapour/gas to the inside of the casing, at one of the ends of said cylinder is provided with a central vapour extraction opening (9,9') through which the vapour/gas is extracted from the inside of the casing to the subsequent piping (10), wherein the inside of said casing is being sealed of from the outside of said casing (17) and thereby only having the holes in the cylindrical surface (17) as passage through said casing and wherein the extraction opening (9,9') is formed by a vapour extraction pipe (10) which is sealingly in contact with the casing and the end of which extends concentric around an axis of rotation (27) into the rotatable casing, **characterized in that** said casing (17) is arranged in a vessel (3), which may contain a liquid to be evaporated extending to a given liquid level (15) and that said casing is arranged immediately over said liquid level (15) in said vessel.

2. Evaporator according to claim 1, **characterized in that** the vapour extraction pipe (10) only extends to the casing so that the vapour extraction opening (9,9') is constituted of a central opening (9), which is provided in the casing, and which is sealed to the compartment from where vapour is extracted.

3. Evaporator according to claim 2, **characterized in that** the casing comprises a substantially cylindrical net (17), which is closed by a circular sheet (19) at one of its ends, and which is closed by an annular sheet (18) at its other end, which sheet (18) encircles the vapour extraction pipe (10).

4. Method for foam suppression and for removing drop-formed liquids from a gas/vapour by means of an evaporator (1) according to claim 1, and wherein a vapour extraction opening (9,9') is positioned in a rotatable casing (17) provided with openings, which casing rotates with such a number of revolutions that the peripheral velocity of the radial outer end of each of the openings of the casing exceeds the penetrating velocity of vapour through the openings, **characterized in that** the casing (17) is rotated in a position immediately over a liquid level (15) in a vessel (3) of an evaporator, said liquid is boiled in the vessel from where the vapour is extracted whereby the foam produced from said boiling is suppressed

5. Method according to claim 4, **characterized in that** the ratio of the peripheral velocity to the penetrating velocity is 2-10, preferably 3-5.

6. Method according to claim 4, **characterized in that** the casing (17) rotates around an axis (27), which simultaneously is the central axis of a circular vapour extraction opening (10).

## Patentansprüche

1. Verdampfer (1), aufweisend eine Vorrichtung (14) zur Schaumunterdrückung und zur Entfernung tropfenförmiger Flüssigkeiten aus einem Dampf gemäß einem Verfahren nach einem der Ansprüche 4 bis 6, wobei die Vorrichtung ein drehbares Gehäuse (17) aufweist, das aus einem Zylinder (17) besteht, der in seiner zylindrischen Oberfläche Löcher aufweist, wodurch der Transport von Dampf/Gas zum Inneren des Gehäuses ermöglicht wird, wobei der Zylinder an einem seiner Enden mit einer zentralen Öffnung (9, 9') zur Dampfentnahme versehen ist, durch die der Dampf/das Gas vom Inneren des Gehäuses zur nachfolgenden Rohrleitung (10) entnommen wird, wobei das Innere des Gehäuses gegenüber der Außenseite des Gehäuses (17) abgedichtet ist und dadurch nur die Löcher in der zylindrischen Oberfläche (17) als Durchgang durch das Gehäuse vorhanden sind und wobei die Entnahmeöffnung (9, 9') von einem Dampfentnahmerohr (10) ausgebildet wird, das abdichtend in Kontakt mit dem Gehäuse steht und dessen Ende sich konzentrisch um eine Rotationsachse (27) in das drehbare Gehäuse erstreckt, **dadurch gekennzeichnet, daß** das Gehäuse (17) in einem Gefäß (3) angeordnet ist, das eine zu verdampfende Flüssigkeit enthalten kann, die sich bis zu einem vorgegebenen Flüssigkeitsniveau (15) erstreckt, und daß das Gehäuse unmittelbar über dem Flüssigkeitsniveau (15) in dem Gefäß angeordnet ist.

2. Verdampfer nach Anspruch 1, **dadurch gekennzeichnet, daß** das Dampfentnahmerohr (10) sich nur zum Gehäuse erstreckt, so daß die Dampfentnahmeöffnung (9,9') von einer zentralen Öffnung (9) gebildet ist, die im Gehäuse vorhanden ist und die gegen das Teil, dem der Dampf entnommen wird, abgedichtet ist.

3. Verdampfer nach Anspruch 2, **dadurch gekennzeichnet, daß** das Gehäuse ein im wesentlichen zylindrisches Netz (17) aufweist, das an einem seiner Enden von einer kreisförmigen Platte (19) geschlossen ist und an seinem anderen Ende von einer ringförmigen Platte (18), welche Platte (18) das Dampfentnahmerohr (10) umgibt.

4. Verfahren zur Schaumunterdrückung und zur Entfernung tropfenförmiger Flüssigkeiten aus einem Gas/Dampf mittels eines Verdampfers (1) nach Anspruch 1, wobei eine Dampfentnahmeöffnung (9,9') in einem drehbaren Gehäuse (17) positioniert ist, das mit Öffnungen versehen ist, welches Gehäuse sich mit einer solchen Anzahl an Drehungen dreht, daß die Umfangsgeschwindigkeit des radial äußeren Endes jeder der Öffnungen des Gehäuses die Durchtrittsgeschwindigkeit von Dampf durch die Öffnungen übersteigt, **dadurch gekennzeichnet, daß** das Gehäuse (17) in einer Position unmittelbar über einem Flüssigkeitsiveau (15) in einem Gefäß (3) eines Verdampfers gedreht wird, wobei die Flüssigkeit in dem Gefäß, dem der Dampf entnommen wird, gekocht wird, wodurch der durch das Kochen erzeugte Schaum unterdrückt wird.

5. Verfahren nach Anspruch 4, **dadurch gekennzeichnet, daß** das Verhältnis der Umfangsgeschwindigkeit zur Durchtrittsgeschwindigkeit 2 bis 10, vorzugsweise 3 bis 5, beträgt.

6. Verfahren nach Anspruch 4, **dadurch gekennzeichnet, daß** das Gehäuse (17) sich um eine Achse (27) dreht, die gleichzeitig die zentrale Achse einer kreisförmigen Dampfentnahmeöffnung (10) ist.

## Revendications

1. Evaporateur (1) comprenant un dispositif (14) pour la suppression de la mousse et pour éliminer des liquides en forme de gouttelettes d'une vapeur par un procédé selon l'une quelconque des revendications 4 à 6, ledit dispositif comprend un boîtier tournant (17) constitué d'un cylindre (17) présentant des trous dans sa surface cylindrique permettant le transport de vapeur/gaz à l'intérieur du boîtier, l'une des extrémités dudit cylindre est pourvue d'une ouverture d'extraction de vapeur centrale (9,9') à travers laquelle la vapeur/gaz est extraite de l'intérieur du boîtier à la tuyauterie qui suit (10), où l'intérieur dudit boîtier est rendu étanche par rapport à l'extérieur dudit boîtier (17) et de ce fait présentant seulement les trous dans la surface cylindrique (17) comme passage à travers ledit boîtier, et où l'ouverture d'extraction (9,9') est formée par un tuyau d'extraction de vapeur (10) qui est en contact étanche avec le boîtier et dont l'extrémité s'étend d'une manière concentrique autour d'un axe de rotation (27) dans le boîtier tournant, **caractérisé en ce que** ledit boîtier (17) est agencé dans une cuve (3), qui peut contenir un liquide à évaporer s'étendant jusqu'à un niveau de liquide donné (15), et **en ce que** ledit boîtier est agencé directement au-dessus dudit niveau de liquide (15) dans ladite cuve.

2. Evaporateur selon la revendication 1, **caractérisé en ce que** le tuyau d'extraction de vapeur (10) s'étend seulement au boîtier de telle sorte que l'ouverture d'extraction de vapeur (9,9') est constituée d'une ouverture centrale (9) qui est ménagée dans le boîtier et qui est scellée au compartiment duquel la vapeur est extraite.

3. Evaporateur selon la revendication 2, **caractérisé en ce que** le boîtier comprend un filet sensiblement cylindrique (17) qui est fermé par une feuille circulaire (19) à l'une de ses extrémités, et qui est fermé par une feuille annulaire (18) à son autre extrémité, ladite feuille (18) encerclant le tuyau d'extraction de vapeur (10).

4. Procédé pour la suppression de la mousse et pour éliminer des liquides en forme de gouttelettes d'un gaz/vapeur au moyen d'un évaporateur (1) selon la revendication 1, et où une ouverture d'extraction de vapeur (9,9') est positionnée dans un boîtier tournant (17) pourvu d'ouvertures, ledit boîtier tournant selon un tel nombre de tours que la vitesse périphérique de l'extrémité radiale extérieure de chacune des ouvertures du boîtier dépasse la vitesse de pénétration de la vapeur à travers les ouvertures, **caractérisé en ce que** le boîtier (17) est tourné dans une position directement au-dessus d'un niveau de liquide (15) dans une cuve (3) d'un évaporateur, ledit liquide est amené à bouillir dans la cuve à partir de laquelle la vapeur est extraite par quoi la mousse produite par ladite ébullition est supprimée.

5. Procédé selon la revendication 4, **caractérisé en ce que** le rapport de la vitesse périphérique à la vitesse de pénétration est de 2-10, de préférence de 3-5.

6. Procédé selon la revendication 4, **caractérisé en ce que** le boîtier (17) tourne autour d'un axe (27) qui est simultanément l'axe central d'une ouverture d'extraction de vapeur circulaire (10).
